# EUROPÄISCHE PATENTANMELDUNG

(11) **EP 1 353 103 A2**
(43) Veröffentlichungstag der Anmeldung: **15.10.2003**
(21) Anmeldenummer: 03450079.3
(22) Anmeldetag: 02.04.2003
(51) Int. Cl.: F16K 31/06, F16K 39/02

(54) **Ventilanordnung mit elektromagnetischer Betätigung**

(30) Priorität: 08.04.2002 AT 5392002
(71) Anmelder: HYGRAMA AG, 6300 Zug (CH)
(72) Erfinder: Teltscher, Rainer, 83666 Waakirchen (DE); Dörfler, Erich, 86899 Landsberg-Erpfting (DE); Meier, Günter, 86980 Ingenried (DE)
(74) Vertreter: Laminger, Norbert, Mag.

(57) **Zusammenfassung**

Ventilanordnung mit elektromagnetischer Betätigung, mit zwei durch die Wirkung eines Elektromagneten gegen die Kraft von Schließfedern verschiebbaren Ventilelementen, welche zwischen der Zuführung und dem Ausgang befindliche Ventilsitze unterschiedlichen Querschnittes dichtend verschließen oder freigeben.

Um bei verringerter Baugröße auch die Betätigung vereinfachen zu können, sodaß auch die Ansteuerung der Ventilelemente einfacher und damit weniger störanfällig ausgelegt werden kann, wirkt das erste Ventilelement (4) mit einem Ventilsitz (3) mit großem Querschnitt zusammen und weist es eine Passage (6) vom Raum stromaufwärts des ersten Ventilsitzes (3) zu einem zweiten Ventilsitz (7) mit kleinerem Querschnitt auf, welcher zweite Ventilsitz (7) mit dem zweiten Ventilelement (8) zusammenwirkt.

## Beschreibung

Die Erfindung betrifft eine Ventilanordnung mit elektromagnetischer Betätigung, mit zwei durch die Wirkung eines Elektromagneten gegen die Kraft von Schließfedern verschiebbaren Ventilelementen, welche zwischen der Zuführung und dem Ausgang befindliche Ventilsitze unterschiedlichen Querschnittes dichtend verschließen oder freigeben.

Derartige Ventilanordnungen sind für vielerlei Anwendungen bekannt. Beispielsweise beschreibt die WO88/10376 eine Kupplungseinrichtung für Kraftfahrzeuge, bei welcher die Betätigung der Kupplung hilfskraftunterstützt erfolgt. Um nun je nach der am Kupplungspedal aufgewendeten Kraft die Hilfskraft proportional zu steuern, sind sowohl zum Aus- als auch Einkuppeln je zwei Magnetventile mit unterschiedlichen Öffnungsquerschnitten vorgesehen.

Ähnliche Ventilanordnungen sind auch bei modernen Gasheizungs-Anlagen in Verwendung.

Die Aufgabe der vorliegenden Erfindung war eine Ventilanordnung, bei welcher sowohl die Baugröße verringert und/oder der Aufbau vereinfacht sind, bei welcher weiters die Betätigung vereinfacht werden kann, sodaß auch die Ansteuerung der Ventilelemente einfacher und damit weniger störanfällig ausgelegt werden kann.

Zur Lösung dieser Aufgabe ist erfindungsgemäß vorgesehen, daß das erste Ventilelement mit einem Ventilsitz mit großem Querschnitt zusammenwirkt und eine Passage vom Raum stromaufwärts des ersten Ventilsitzes zu einem zweiten Ventilsitz mit kleinerem Querschnitt aufweist, welcher zweite Ventilsitz mit dem zweiten Ventilelement zusammenwirkt.

Gemäß einer bevorzugten Ausführungsform der Erfindung ist zumindest das erste Ventilelement als kompakter Bauteil ausgeführt, der lediglich von der Passage vom ersten Ventilsitz zum zweiten Ventilsitz durchsetzt ist und an welchem die Schließfeder außen angreift. Damit ergibt sich ein optimaler Verlauf des magnetischen Flusses und damit günstigere Kraftverhältnisse am ersten Ventilelement.

Vorteilhafterweise ist vorgesehen, daß das zweite Ventilelement in Längsrichtung hinter dem ersten Ventilelement angeordnet ist und die Passage das erste Ventilelement vorzugsweise im wesentlichen in gerader Linie durchsetzt. Damit wirkt das zweite Ventilelement in der vollkommen geschlossenen Stellung mit dem ersten Ventilelement in Schließrichtung zusammen, so daß diese Schließstellung sicher auch gegen hohe Drücke gehalten werden kann. Die gerade Durchströmung des Ventilelementes bietet eine verbesserte Strömungscharakteristik in der relativ langen Passage zwischen den Ventilsitzen.

Vorteilhafterweise ist dabei der zweite Ventilsitz am ersten Ventilelement selbst gebildet.

Um auch die Kräfteverhältnisse für die Ventilstufe mit geringerem Querschnitt zu optimieren, ist gemäß einer weiteren vorteilhaften Ausführungsform vorgesehen, daß auch das zweite Ventilelement als kompakter Bauteil ausgeführt ist, an welchem die Schließfeder vorzugsweise außen angreift.

Vorzugsweise sind bei einfachem Aufbau und bedeutender Platzersparnis beide Ventilsitze und Ventilelemente im selben Ventilgehäuse angeordnet.

Gemäß einer bevorzugten Ausführungsform der Erfindung sind beide Schließfedern unabhängig voneinander am Gehäuse der Ventilanordnung abgestützt.

Um die proportionale Ansteuerung zu erleichtern und die richtige Reihenfolge der Betätigung der Ventilstufen zu gewährleisten, ist vorzugweise vorgesehen, daß die das zweite Ventilelement beaufschlagende Schließfeder eine geringere Kraft ausübt als die das erste Ventilelement beaufschlagende Schließfeder.

Gemäß einer vorteilhaften Ausführungsform der Erfindung weist das Ventilgehäuse eine Entlüftungsbohrung auf, die in der Schließstellung beider Ventilelemente mit dem Ausgang des Ventils verbunden ist, welche Entlüftungsbohrung durch das zweite Ventilelement am Ende seines Ventilhubs verschließbar ist.

Vorzugsweise ist dabei die Entlüftungsbohrung auf der dem zweiten Ventilsitz gegenüberliegenden Seite des zweiten Ventilelementes vorgesehen und ist durch die dem zweiten Ventilsitz gegenüberliegenden Seite des zweiten Ventilelementes verschließbar.

Gemäß einer anderen Ausführungsform ist die erfindungsgemäße Ventilanordnung dadurch gekennzeichnet, daß das Ventilgehäuse eine mit einer Druckmittelquelle verbindbare Zufuhr aufweist, die in der Schließstellung beider Ventilelemente mit einem Vorsteuer-Ausgang des Ventils verbunden ist, welche Zufuhr durch das zweite Ventilelement am Ende seines Ventilhubs verschließbar ist, wobei gleichzeitig eine Verbindung von der Zufuhr zum Verbraucher-Anschluß freigegeben ist.

Bei einer Bauart wie im vorigen Absatz beschrieben ist eine einfache Konstruktion möglich, bei welcher vorteilhafterweise die Verbindung zwischen Zufuhr und Verbraucher-Anschluß durch eine im zweiten Ventilelement ausgearbeitete Bohrung gebildet ist, welche auf der dem ersten Ventilelement zugewandten Seite außerhalb des Bereiches des zweiten Ventilsitzes endet.

Um die Herstellung der Ventilelemente und den Gesamtaufbau durch Verringerung der notwendigen Bauteile zu vereinfachen, ist vorgesehen, daß die Ventilelemente selbst überwiegend oder vorzugsweise zur Gänze aus magnetisierbarem Material bestehen.

In der nachfolgenden Beschreibung soll die Erfindung anhand zweier bevorzugter Ausführungsbeispiele näher erläutert werden, welche auch in den beigefügten Zeichnungsfiguren 1 und 2 jeweils im Längssschnitt dargestellt sind.

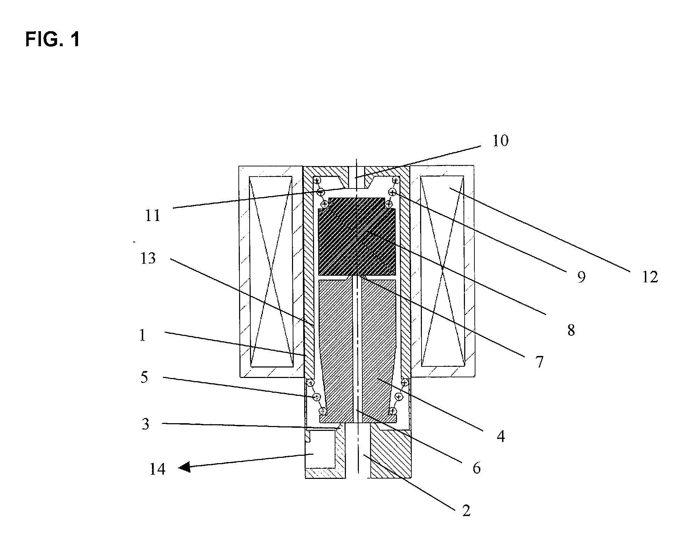

In einem Ventilgehäuse 1 ist bei der Ausführungsform der Fig. 1 eine Zuführung 2 vorgesehen, durch welchen die anstehende Druckluft bis zu einem ersten Ventilsitz 3 gelangt. Dieser erste Ventilsitz 3 mit großem Querschnitt wird durch ein erstes Ventilelement in Form eines vorzugsweise kompakten Hauptplungers 4 geschlossen gehalten oder geöffnet, auf welchen Hauptplunger 4 eine diesen umgebende erste Schließfeder 5 einwirkt und auf den Ventilsitz 3 hin mit einer großen Schließkraft beaufschlagt.

Im Hauptplunger 4 ist aber eine Passage für die zuströmende Druckluft vom Raum vor dem ersten Ventilsitz 3 in einen Raum hinter dem Hauptplunger 4 in Form der vorteilhafterweise im wesentlichen geradlinig geführten Bohrung 6 im sonst kompakten Hauptplunger 4 vorgesehen. Diese Bohrung 6 reicht bis zu einem zweiten Ventilsitz 7 mit kleinerem Querschnitt als der ersten Ventilsitz 3 am hinteren, dem Ventilsitz 3 abgewandten Ende des Hauptplungers 4.

Der zweite Ventilsitz 7 wird durch ein zweites im Gehäuse 1 befindliches Ventilelement in Form eines in Längsrichtung hinter dem Hauptplunger 4 angeordneten Nebenplungers 8 geöffnet oder verschlossen gehalten, wobei eine Schließfeder 9 mit geringerer Kraft als die Schließfeder 5 auf diesen vorteilhaftweise ebenfalls kompakt ausgeführten Nebenplungers 6 einwirkt. Die Schließfeder 5 stützt sich, ebenso wie die Schließfeder 9 aber von dieser unabhängig, nur am Gehäuse 1 der Ventilanordnung ab. In der dargestellten Ausführungsform ist im Gehäuse 1 noch eine Entlüftungsöffnung 10 vorgesehen, welche zu einem dritten Ventilsitz 11 im Inneren des Gehäuses 1 führt. Dieser dritte Ventilsitz 11 kann durch den Nebenplunger 8 verschlossen werden, wenn dieser entgegen der Kraft der Schließfeder 9 vom zweiten Ventilsitz 7 abgehoben und in der Endstellung seines Öffnungshubes ist.

Zur Betätigung der beiden Plunger 4, 8, die entweder zur Gänze aus magnetisierbarem Material bestehen oder solches zumindest zum Teil enthalten, ist ein ansteuerbarer Elektromagnet 12 mit dem Steuerstrom proportionaler Magnetkraft an der Außenseite des Gehäuses 1 der Ventilanordnung vorgesehen.

Die von einer nicht dargestellten Druckluftquelle stammende Druckluft oder ein sonstiges, durch die erfindungsgemäße Ventilanordnung zu steuerndes Medium gelangt nach Freigabe zumindest des zweiten Ventilsitzes 7 durch den Spalt 13 zwischen der Innenwandung des Gehäuses 1 und dem Hauptplunger 4 zum Ausgang 14 der Ventilanordnung und weiter zu einem ebenfalls nicht dargestellten Verbraucher.

Die anstehende Druckluft strömt durch die Zuführung 1 und weiter durch die Bohrung 6 im Hauptplunger 4 zum zweiten Ventilsitz 7 am Hauptplunger 4. Die zweiten Schließfeder 9 drückt bei unbestromtem Elektromagnet 12 den Nebenplunger 8 auf den Ventilsitz 7, hält diesen damit dicht verschlossen und verhindert dadurch das Überströmen der Druckluft über den Spalt 13 zum Ausgang 14. Der angeschlossene Verbraucher ist dagegen über den Ausgang 14, den Spalt 13 und die Entlüftungsbohrung 10 entlüftet.

Wird nun die Magnetspule 12 mit einem Teil des maximalen Stromes beaufschlagt - der je nach Betriebsdruck der Druckluft und Stärke der Schließfeder 5 abgestimmt werden muß -, wird der Nebenplunger 8 an den Ventilsitz 11 der Entlüftungsbohrung 10 gezogen und dichtet damit diese Entlüftungsbohrung 11 ab. Nun kann die Druckluft über den Querschnitt der Bohrung 6, den Ventilsitz 7 mit kleinerem Querschnitt und den Spalt 13 zum Ausgang 14 und weiter zum Verbraucher strömen. Nimmt man nun die Spannung von der Spule 12 wird aufgrund der Wirkung der Schließfeder 9 der Nebenplunger 8 wieder auf den Ventilsitz 7 gedrückt und damit die Luftzufuhr zum Ausgang 14 gesperrt - und gleichzeitig der Verbraucher wieder entlüftet.

Wird dagegen die Magnetspule weiter mit dem maximalen Strom beaufschlagt - was auch ohne vorheriges Öffnen der Ventilstufe mit dem kleineren Querschnitt erfolgen kann - werden schließlich beide Plunger 4, 8 zum Gegenpol gezogen und somit auch der Hauptplunger 4 vom ersten Ventilsitz 3 gegen die Wirkung der stärkeren Schließfeder 5 abgehoben und damit der große Querschnitt freigegeben. Es ist also durch die erfindungsgemäße Anordnung möglich, in einer einfachen Anordnung, vorzugsweise sogar in einem Gehäuse mit zwei Querschnitten zu arbeiten.

Diese oben beschriebene Ausführung ist als 3/2-Wegeventil ausgeführt. Bei dauerhaft verschlossener oder vermiedener Entlüftungsbohrung 10 ist auch eine 2/2-Wegeventil-Ausführung möglich.

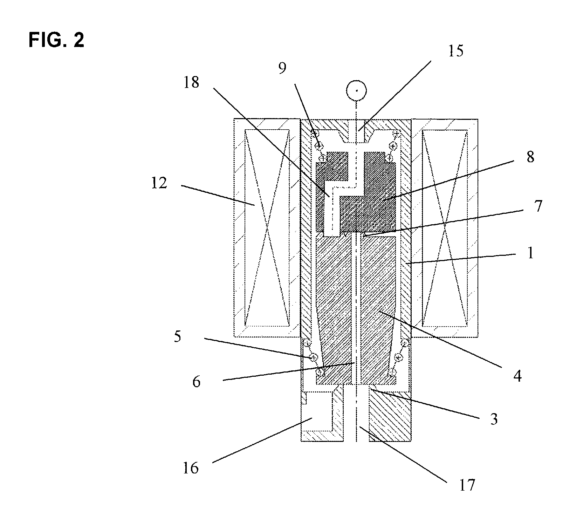

Bei der in Fig. 2 dargestellten Ausführungsform, welche ebenfalls eine 3/2-Wegeventil-Variante zum Gegenstand hat, ist das Ventilgehäuse 1 mit einer Druckmittelquelle verbindbar, wobei aber der Zufuhr-Anschluß 15 für die Druckmittelquelle auf der verglichen mit Fig. 1 gegenüberliegenden Seite des Ventilgehäuses 1 vorgesehen ist. In der in der Zeichnungsfigur 2 dargestellten Schließstellung beider Ventilelemente 4, 8 unter der Wirkung der beiden Schließfedern 5 und 9 ist die Druckmittel-Zufuhr 15 mit einem Vorsteuer-Ausgang 16 des Ventils verbunden ist, so dass an diesem Ausgang 16 konstant Druck ansteht. Die Druckmittelverbindung zum Verbraucher, über den Verbraucher-Anschluß 17 ist in dieser Stellung der Ventilanordnung verschlossen, da das zweite Ventilelement 8 den zweiten Ventilsitz 7 und damit die Passage 6 verschließt.

Wenn nun die Spule 12 bestromt wird, wird das zweite Ventilelement 8 gegen die Wirkung der Schließfeder 9 vom Ventilsitz 7 abgehoben und stellt dann am Ende seines Ventilhubs eine Verbindung von der Zufuhr 15 zum Verbraucher-Anschluß 17 her. Diese Verbindung zwischen Zufuhr 15 und Verbraucher-Anschluß 17 ist vorzugsweise wie in Fig. 2 dargestellt durch eine im zweiten Ventilelement 8 ausgearbeitete Bohrung 18 gebildet, welche auf der dem ersten Ventilelement 4 zugewandten Seite außerhalb des Bereiches des zweiten Ventilsitzes 7 endet. Die besagte Verbindung besteht in dieser Stellung der Ventilanordnung gleichzeitig mit der Druckmittelversorgung des Vorsteuer-Ausganges 16 des Ventils.

Erst wenn die Spule 12 stärker bestromt wird, wird zusätzlich auch das erste Ventilelement 4 vom ersten Ventilsitz 3 abgehoben und verschließt am Ende seines Ventilhubes wieder die Passage 18 im zweiten Ventilelement 8. Dadurch ist die Druckmittelzufuhr 15 versperrt und das Druckmittel kann vom Vorsteuer-Ausgang 16 zum Verbraucher-Anschluß 17 strömen. Damit wird aber auch der Druck an der Vorsteuerung abgebaut und das angeschlossene Ventil oder ähnliche Schaltelement kann umschalten.

## Patentansprüche

1. Ventilanordnung mit elektromagnetischer Betätigung, mit zwei durch die Wirkung eines Elektromagneten gegen die Kraft von Schließfedern verschiebbaren Ventilelementen, welche zwischen der Zuführung und dem Ausgang befindliche Ventilsitze unterschiedlichen Querschnittes dichtend verschließen oder freigeben, **dadurch gekennzeichnet, daß** das erste Ventilelement (4) mit einem Ventilsitz (3) mit großem Querschnitt zusammenwirkt und eine Passage (6) vom Raum stromaufwärts des ersten Ventilsitzes (3) zu einem zweiten Ventilsitz (7) mit kleinerem Querschnitt aufweist, welcher zweite Ventilsitz (7) mit dem zweiten Ventilelement (8) zusammenwirkt.

2. Ventilanordnung nach Anspruch 1, **dadurch gekennzeichnet, daß** zumindest das erste Ventilelement (4) als kompakter Bauteil ausgeführt ist, der lediglich von der Passage (6) vom ersten Ventilsitz (3) zum zweiten Ventilsitz (7) durchsetzt wird und an welchem die Schließfeder (5) außen angreift.

3. Ventilanordnung nach Anspruch 2, **dadurch gekennzeichnet, daß** das zweite Ventilelement (8) in Längsrichtung hinter dem ersten Ventilelement (4) angeordnet ist und die Passage (6) das erste Ventilelement (4) vorzugsweise im wesentlichen in gerader Linie durchsetzt.

4. Ventilanordnung nach Anspruch 3, **dadurch gekennzeichnet, daß** der zweite Ventilsitz (7) am ersten Ventilelement (4) selbst gebildet ist.

5. Ventilanordnung nach Anspruch 2, 3 oder 4, **dadurch gekennzeichnet, daß** auch das zweite Ventilelement (8) als kompakter Bauteil ausgeführt ist, an welchem die Schließfeder (9) vorzugsweise außen angreift.

6. Ventilanordnung nach einem der Ansprüche 1 bis 5, **dadurch gekennzeichnet, daß** beide Ventilsitze (3, 7) und Ventilelemente (4, 8) im selben Ventilgehäuse (1) angeordnet sind.

7. Ventilanordnung nach einem der Ansprüche 1 bis 6, **dadurch gekennzeichnet, daß** beide Schließfedern (5, 9) unabhängig voneinander am Gehäuse der Ventilanordnung abgestützt sind.

8. Ventilanordnung nach einem der Ansprüche 1 bis 7, **dadurch gekennzeichnet, daß** die das zweite Ventilelement (8) beaufschlagende Schließfeder (9) eine geringere Kraft ausübt als die das erste Ventilelement (4) beaufschlagende Schließfeder (5).

9. Ventilanordnung nach einem der Ansprüche 1 bis 8, **dadurch gekennzeichnet, daß** das Ventilgehäuse (1) eine Entlüftungsbohrung (10) aufweist, die in der Schließstellung beider Ventilelemente (4, 8) mit dem Ausgang (14) des Ventils verbunden ist, welche Entlüftungsbohrung (10) durch das zweite Ventilelement (8) am Ende seines Ventilhubs verschließbar ist.

10. Ventilanordnung nach Anspruch 9, **dadurch gekennzeichnet, daß** die Entlüftungsbohrung (10) auf der dem zweiten Ventilsitz (7) gegenüberliegenden Seite des zweiten Ventilelementes (8) vorgesehen ist und durch die dem zweiten Ventilsitz (7) gegenüberliegenden Seite des zweiten Ventilelementes (8) verschließbar ist.

11. Ventilanordnung nach einem der Ansprüche 1 bis 8, **dadurch gekennzeichnet, daß** das Ventilgehäuse (1) eine mit einer Druckmittelquelle verbindbare Zufuhr (15) aufweist, die in der Schließstellung beider Ventilelemente (4, 8) mit einem Vorsteuer-Ausgang (16) des Ventils verbunden ist, welche Zufuhr (15) durch das zweite Ventilelement (8) am Ende seines Ventilhubs verschließbar ist, wobei gleichzeitig eine Verbindung von der Zufuhr (15) zum Verbraucher-Anschluß (17) freigegeben ist.

12. Ventilanordnung nach Anspruch 11, **dadurch gekennzeichnet, daß** die Verbindung zwischen Zufuhr (15) und Verbraucher-Anschluß (17) durch eine im zweiten Ventilelement (8) ausgearbeitete Bohrung (18) gebildet ist, welche auf der dem ersten Ventilelement (4) zugewandten Seite außerhalb des Bereiches des zweiten Ventilsitzes (7) endet.

13. Ventilanordnung nach einem der Ansprüche 1 bis 12, **dadurch gekennzeichnet, daß** die Ventilelemente (4, 8) selbst überwiegend oder vorzugsweise zur Gänze aus magnetisierbarem Material bestehen.
